# EUROPEAN PATENT SPECIFICATION

(11) **EP 4 140 817 B1**
(45) Date of publication and mention of the grant of the patent: **30.10.2024**
(21) Application number: 22192042.4
(22) Date of filing: 24.08.2022
(51) Int. Cl.: B60R 3/00

(54) **IMPROVED LADDER ASSEMBLY FOR A WORK VEHICLE**
VERBESSERTE LEITERANORDNUNG FÜR EIN ARBEITSFAHRZEUG
ENSEMBLE ÉCHELLE AMÉLIORÉ POUR VÉHICULE DE TRAVAIL

(30) Priority: 27.08.2021 IT 202100022430
(43) Date of publication of application: 01.03.2023
(73) Proprietor: CNH Industrial Italia S.p.A., 10156 Torino (IT)
(72) Inventor: Mamei, Stefano, 41012 Carpi (IT); Butti, Matteo, 24047 Treviglio, Bergamo (IT); Reichel, Christian, A-3232 Bischofstetten (AT)
(74) Representative: CNH Industrial IP Department

(56) References cited:
- US-A- 6 058 875
- US-A1- 2002 189 903

## Description

### TECHNICAL FIELD

The present invention concerns a ladder assembly, in particular a ladder assembly for a work vehicle.

The present invention finds its preferred, although not exclusive, application in agricultural vehicle, such as a tractor; reference will be made to this application by way of example below.

### BACKGROUND OF THE INVENTION

Work vehicle such as agricultural vehicles usually comprise a ladder assembly configured to allow the user to jump on higher portions of the vehicle, such as the cab.

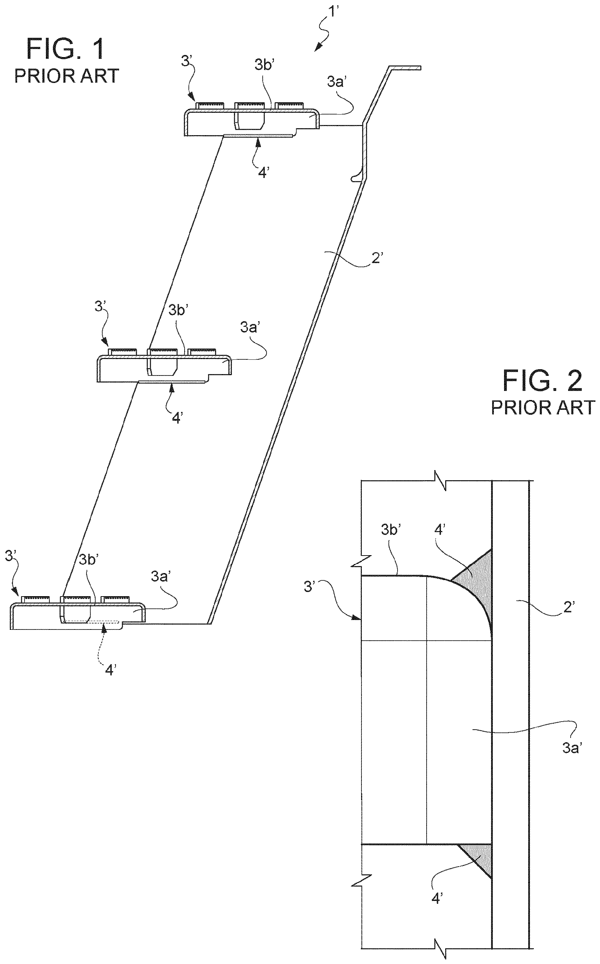

As shown in figures 1 and 2, a ladder assembly 1' as known in the art comprises a pair of side elements 2' configured to be secured to the vehicle and a plurality of steps 3' welded to the side elements 2'.

US2002/189903A1 show an example of such arrangement.

In particular, in order to comply with structural requirements each step 3' is welded via pair of welded joints 4'. In greater detail each step comprises a step portion 3b' and a pair of lateral portions 3a' configured to cooperate at contact with the side elements 2' and configured to be welded on this latter.

In particular, as better shown in figure 2, the lateral portions 3a' are fitted within the side members 2' and the welded joints 4' are placed above and below each lateral portion 3'.

In such configuration, it is clear that the surfaces in contact between the side member 2' and the lateral portion 3a' cannot be reached by paint powders that are provided on ladder surface to avoid rust formation.

Accordingly, the known ladder steps tends to fail early due to rust formation in the zone of the coupling between the steps and the side elements.

Clearly, this incurs in increasing of costs and in possibility of injuries of the driver is the failure happens during the use of the ladder.

Therefore, the need is felt to reduce the rust formation in known ladder assemblies for work vehicles.

An aim of the present invention is to satisfy the needs as mentioned above, in a cost effective and optimized way.

### SUMMARY OF THE INVENTION

The afore mentioned aim is reached by a ladder assembly as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is lateral sectioned view of a ladder system as known in the art;
- Figure 2 is a lateral sectioned enlarged view of a portion of the ladder system of figure 1;
- Figure 3 is a perspective view of a work vehicle comprising a ladder system according to the invention;
- Figure 4 is a perspective view of a ladder system according to the invention;
- Figure 5 is lateral sectioned view of the ladder system of figure 4; and
- Figure 6 is a lateral sectioned enlarged view of a portion of the ladder system of figure 5.

### DETAILED DESCRIPTION OF THE INVENTION

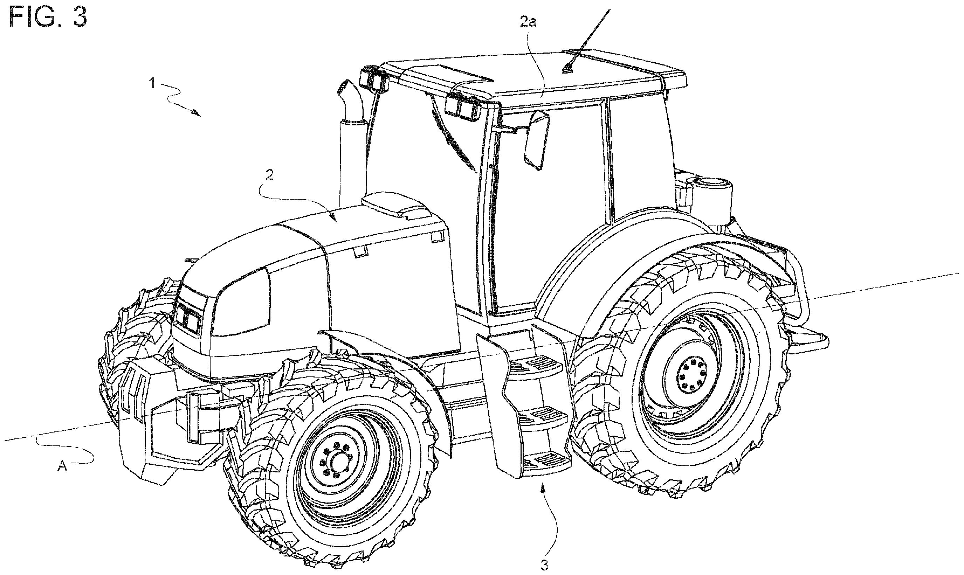

Figure 3 discloses a work vehicle 1, in particular an agricultural vehicle such as a tractor, comprising a vehicle's body 2 extending along a longitudinal, i.e. driving direction, axis.

The work vehicle 1 further comprises a ladder assembly 3 carried by vehicle's body 2 and configured to allow a driver to jump on it to access to higher parts of vehicle's body, e.g. to a cab 2a.

According to the disclosed embodiment, the ladder assembly 3 comprises essentially a pair of lateral support elements 4a, preferably realized as flat walls, extending transversally with respect to axis A getting out from vehicle's body 2 and distanced one with respect to the other along longitudinal axis A.

Preferably, the ladder assembly 3 further comprises a longitudinal element 4b, preferably realized as a flat wall, configured to connect together the lateral support element 4a along longitudinal direction. In particular, the longitudinal element 4b is connected to the lateral support element 4a to the rear edge thereof, i.e. to the edge faced to vehicle's body 2.

Preferably, longitudinal element 4b and lateral support elements 4a are realized in metal and in one piece. In the disclosed example they may be realized by bending of a single metal sheet.

At least one between the longitudinal element 4b and the lateral support elements 4a is configured to be connected to the vehicle's body 2 to secure the ladder system to vehicle's body. In the disclosed embodiment, the longitudinal element 4b may be secured to vehicle's body 2, e.g. via threaded means.

In particular, the longitudinal element 4b comprises an upper portion 4b' that is substantially vertical and that is configured to be secured to vehicle's body 2 via threaded means, and a lower portion 4b" that is preferably inclined with respect to vertical axis B, in greater detail to getting over from vehicle's body in the lower portion of the ladder assembly, i.e. the nearest to the ground to be facilitate the getting on from the driver.

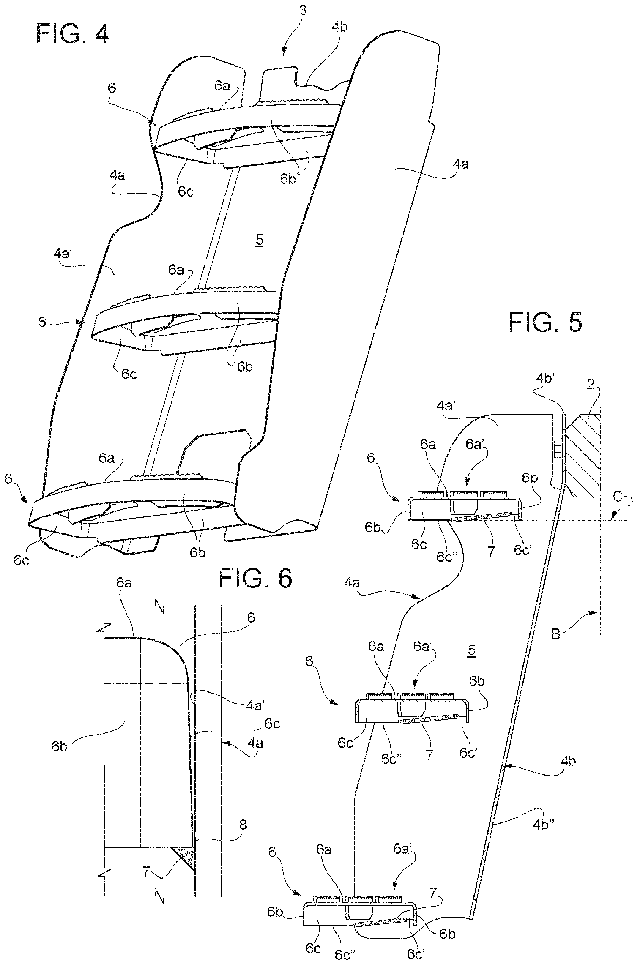

According to the above configuration, as better shown in figure 5, the lateral support elements 4a and the longitudinal element 4b delimit a space 5 that is longitudinally delimited by support elements 4b, vertically opened on both sides and transversally delimited, on vehicle side, by the longitudinal element 4b and, on the opposite side, opened to the environment. In particular, the space 5 is delimited along axis A by inner faces 4a' of the lateral support elements 4a, i.e. the sides of the lateral support elements 4a that are faced one with respect to the other.

The ladder assembly 3 comprises a plurality of steps 6 housed, at least in part, in space 5 and secured by the lateral support elements 4a as follows. In particular, the steps 6 are laterally secured to lateral support elements 4a, in particular by a welding 7 realized on the inner surfaces 4a'.

The steps 6 are vertically placed one with respect to the other along a vertical direction, i.e. along a vertical axis B perpendicular to axis A. According to the disclosed embodiment they are three and equally spaced in vertical direction one with respect to the other.

Furthermore, the steps 6 are preferably secured to lateral support elements 4a one staggered with respect to the other in vertical direction, i.e. each step is secured in a different position along a horizontal, transversal, axis C that is perpendicular to axis A and B.

Making reference to the exemplarily embodiment, the lower step is placed in the more external position with respect to the other steps, the intermediate step is placed more rear along axis C direction, i.e. near to the vehicle body 2, with respect to the lower step and the upper step is further placed rear with respect to intermediate step, i.e. it is the more internal position.

As can be seen in figure 5, preferably, each step 6 is secured to the lateral support elements 4a spaced with respect to longitudinal element 4b, i.e. providing always a rear distance.

In detail, each step 6 comprises a step portion 6a, i.e. an upper portion that may be stepped by the user, a pair of longitudinal front and rear portions 6b and a pair of lateral portions 6c. The longitudinal and lateral portions 6b, 6c extends from at least part of the edge of the step portion 6a along the vertical axis B. In the disclosed example the longitudinal and lateral portions 6b, 6c extends all along the perimeter of the step.

Preferably, each step 6 is realized in metallic material and as one piece.

Advantageously, step portion 4a, as known, comprises an anti-slip portion 6a' configured to avoid slip of the user. In the disclosed example the anti-slip portion 6a' is realized via protrusions extending over the surface of the step portion 4a and that will be not further described for sake of brevity.

Advantageously, each step 6 is secured by welding 7 realized between each lateral portions 6c of the step 6 and the lateral support element 4a.

According to a first aspect of the invention, the lateral portions 6c are dimensioned to be spaced of a gap 8 with respect to lateral support elements 4a, in particular such gap 8 is less than 1 mm, preferably 0,5 mm.

In particular, the lateral portions 6c extends inclined from the step portion 6a with respect to vertical axis B, in particular they are inclined so as to taper outside the area delimited by step portion 6a. The inclination of the lateral portions 6c is preferably comprised in between 3° and 6°.

According to the above, the gap 8 is defined between the lower edge of the lateral portion 6c and the inner face 4a' of the lateral support element 4a wherein the longitudinal distance between the lateral portion 6c and the lateral support element 4a is at minimum and wherein the welding 7 is provided.

It is clarified that the lower edge of lateral portion 6c is the edge faced to ground, i.e. the edge opposite with respect to the step portion 6a.

According to a second aspect of the invention, the lateral portions 6c are inclined in the welding area with respect to horizontal axis C.

In particular, according to the described embodiment, the lateral portions 6c comprises a bottom edge provided with an inclined edge portion 6c' and a horizontal edge portion 6c". In particular, the inclined edge portion 6c'' is faced to vehicle's body 2, while horizontal edge portion 6c'' is placed towards the environment.

In detail, the inclined edge portion 6c' is inclined with respect to axis C of about 5° to 8°.

The welding 7 is realized only between the bottom edge of the lateral portions 6c and the lateral support elements 4a and, advantageously, only in the inclined edge portion 6c' .

In view of the foregoing, the advantages of a ladder assembly according to the invention are apparent.

The presence of a gap 8 between the steps 6 and the lateral support element 4a allows the paint powders to reach every portion of the ladder assembly 1, thereby reducing the formation of rust.

Accordingly, the useful life of the ladder assembly 1 is increased and the need of reparation is avoided. Consequently, the risk of injuries of the driver is reduced.

Furthermore, since the lateral portion of the step has an edge inclined with respect to the horizontal direction, the bottom welding length is increased of at least 30-40% with respect to known systems.

Accordingly, the step may be fixed to the lateral support element without the need of the top welding as known in the art. In this ways, costs of manufacturing is reduced.

Therefore, the paint powder are further facilitated to cover all the spaces between the steps and the lateral support element.

Furthermore, in this way it is provided a channel to allow water or debris to flow out from the ladder assembly.

It is clear that modifications can be made to the described ladder assembly which do not extend beyond the scope of protection defined by the claims.

For example, the shape of the lateral support elements 4a may be varied and the longitudinal element 4b may be absent.

Similarly, the anti-slip surface may be realized in different manner or the shapes of the steps 6 may be varied such as their number.

## Claims

1. Ladder assembly (3) for a work vehicle, said ladder assembly (3) comprising a pair of lateral support elements (4a) spaced apart with respect to a longitudinal axis (A) of said vehicle and a plurality of steps (6) laterally comprised by and secured to said lateral support elements (4a),
said ladder assembly (3) is **characterized in that** said steps (6) comprise a step portion (6a) configured to be stepped by the user and a pair of lateral portions (6c) extending from at least part of said step portion (6a) along a vertical axis (B) perpendicular to said longitudinal axis (A) and defining a lower edge opposite to said step portion (6a), and
said lower edge of said lateral portions (6c) is connected via a welding (7) to said lateral support elements (4a), and
said lateral portions (6c) defining a minimum gap (8) with respect to said lateral support elements (4a) and extending inclined from said step portion (6a) with respect to said vertical axis (B).

2. Ladder assembly according to claim 1, wherein said minimum gap (8) is lower than 1 mm.

3. Ladder assembly according to claim 1, wherein said minimum gap (8) is 0,5 mm.

4. Ladder assembly according to any of the preceding claims, wherein said minimum gap (8) is the longitudinal distance between said lower edge and said lateral support element (4a).

5. Ladder assembly according to any of the preceding claims, wherein said inclination of said lateral portions (6c) with respect to said vertical axis (B) is comprised between 3° and 6°.

6. Ladder assembly according to any of said preceding claims, wherein said lower edge of said lateral portions (6c) comprises at least an inclined edge portion (6c') that is inclined with respect to an horizontal axis (C) perpendicular to said longitudinal and vertical axis (A, B), said welding (7) being realized in said inclined edge portion (6c').

7. Ladder assembly according to claim 5, wherein said inclination of said inclined edge portion (6c') with respect to said horizontal axis (C) is comprised between 5° and 8°.

8. Ladder assembly according to any of said preceding claims, further comprising a longitudinal element (4b) connecting together said lateral support elements (4a).

9. Ladder assembly according to claim 8, wherein said longitudinal element (4b) and said lateral support elements (4a) are realized in metal as one piece.

10. Ladder assembly according to claim 8, wherein said longitudinal element (4b) and said lateral support elements (4a) each are defined by flat walls.

11. Work vehicle (1) comprising a ladder assembly (3) according to any of the preceding claims.

## Patentansprüche

1. Leiteranordnung (3) für ein Nutzfahrzeug, wobei die Leiteranordnung (3) ein Paar von seitlichen Stützelementen (4a), die bezüglich einer Längsachse (A) des Fahrzeugs beabstandet sind, und eine Mehrzahl von Stufen (6) umfasst, die seitlich von den seitlichen Stützelementen (4a) umfasst und an diesen befestigt sind,
wobei die Leiteranordnung (3) **dadurch gekennzeichnet ist, dass** die Stufen (6) einen Stufenabschnitt (6a), der dazu eingerichtet ist, von dem Benutzer betreten zu werden, und ein Paar von seitlichen Abschnitten (6c) umfassen, die sich von mindestens einem Teil des Stufenabschnitts (6a) entlang einer vertikalen Achse (B) senkrecht zu der Längsachse (A) erstrecken und eine untere Kante gegenüber dem Stufenabschnitt (6a) definieren, und
wobei die untere Kante der seitlichen Abschnitte (6c) über eine Schweißnaht (7) mit den seitlichen Stützelementen (4a) verbunden ist, und
wobei die seitlichen Abschnitte (6c) einen Mindestabstand (8) in Bezug auf die seitlichen Stützelemente (4a) definieren und sich bezüglich der vertikalen Achse (B) geneigt von dem Stufenabschnitt (6a) erstrecken.

2. Leiteranordnung nach Anspruch 1, wobei der Mindestabstand (8) weniger als 1 mm ist.

3. Leiteranordnung nach Anspruch 1, wobei der Mindestabstand (8) weniger als 0,5 mm ist.

4. Leiteranordnung nach einem der vorhergehenden Ansprüche, wobei der Mindestabstand (8) der Längsabstand zwischen der unteren Kante und dem seitlichen Stützelement (4a) ist.

5. Leiteranordnung nach einem der vorhergehenden Ansprüche, wobei die Neigung der seitlichen Abschnitte (6c) bezüglich der vertikalen Achse (B) zwischen 3° und 6° beträgt.

6. Leiteranordnung nach einem der vorhergehenden Ansprüche, wobei die untere Kante der seitlichen Abschnitte (6a) mindestens einen geneigten Kantenabschnitt (6c') aufweist, der bezüglich einer horizontalen Achse (C) geneigt ist, die senkrecht zu der Längsachse und der vertikalen Achse (A, B) verläuft, wobei die Schweißnaht (7) in dem geneigten Kantenabschnitt (6c') realisiert ist.

7. Leiteranordnung nach Anspruch 5, wobei die Neigung des geneigten Kantenabschnitts (6c') bezüglich der horizontalen Achse (C) zwischen 5° und 8° beträgt.

8. Leiteranordnung nach einem der vorhergehenden Ansprüche, des Weiteren ein Längselement (4b) umfassend, das die seitlichen Stützelemente (4a) miteinander verbindet.

9. Leiteranordnung nach Anspruch 8, wobei das Längselement (4b) und die seitlichen Stützelemente (4a) aus Metall und in einem Stück realisiert sind.

10. Leiteranordnung nach Anspruch 8, wobei das Längselement (4b) und die seitlichen Stützelemente (4a) jeweils durch flache Wände definiert sind.

11. Nutzfahrzeug (1) umfassend eine Leiteranordnung (3) nach einem der vorhergehenden Ansprüche.

## Revendications

1. Ensemble échelle (3) pour un véhicule de travail, ledit ensemble échelle (3) comprenant une paire d'éléments de soutien latéraux (4a) espacés par rapport à un axe longitudinal (A) dudit véhicule et une pluralité de marches (6) latéralement composées d'éléments de soutien latéraux et fixées auxdits éléments de soutien latéraux (4a),
ledit ensemble échelle (3) est **caractérisé en ce que** lesdites marches (6) comprennent une partie de marche (6a) configurée pour être franchie par l'utilisateur et une paire de parties latérales (6c) s'étendant à partir d'au moins une partie de ladite partie de marche (6a) le long d'un axe vertical (B) perpendiculaire audit axe longitudinal (A) et définissant un bord inférieur opposé à ladite partie de marche (6a), et
ledit bord inférieur desdites parties latérales (6c) est raccordé par une soudure (7) auxdits éléments de soutien latéraux (4a), et
lesdites parties latérales (6c) définissant un espace minimum (8) par rapport auxdits éléments de soutien latéraux (4a) et s'étendant de manière inclinée à partir de ladite partie de marche (6a) par rapport audit axe vertical (B).

2. Ensemble échelle selon la revendication 1, dans lequel ledit espace minimum (8) est inférieur à 1 mm.

3. Ensemble échelle selon la revendication 1, dans lequel ledit espace minimum (8) est de 0,5 mm.

4. Ensemble échelle selon l'une quelconque des revendications précédentes, dans lequel ledit espace minimum (8) correspond à la distance longitudinale entre ledit bord inférieur et ledit élément de soutien latéral (4a).

5. Ensemble échelle selon l'une quelconque des revendications précédentes, dans lequel ladite inclinaison desdites parties latérales (6c) par rapport audit axe vertical (B) est comprise entre 3° et 6°.

6. Ensemble échelle selon l'une quelconque des revendications précédentes, dans lequel ledit bord inférieur desdites parties latérales (6c) comprend au moins une partie de bord inclinée (6c') qui est inclinée par rapport à un axe horizontal (C) perpendiculaire audit axe longitudinal et vertical (A, B), ladite soudure (7) étant réalisée dans ladite partie de bord inclinée (6c').

7. Ensemble échelle selon la revendication 5, dans lequel ladite inclinaison de ladite partie de bord inclinée (6c') par rapport audit axe horizontal (C) est comprise entre 5° et 8°.

8. Ensemble échelle selon l'une quelconque des revendications précédentes, comprenant en outre un élément longitudinal (4b) raccordant entre eux lesdits éléments de soutien latéraux (4a).

9. Ensemble échelle selon la revendication 8, dans lequel ledit élément longitudinal (4b) et lesdits éléments de soutien latéraux (4a) sont réalisés en métal d'une seule pièce.

10. Ensemble échelle selon la revendication 8, dans lequel ledit élément longitudinal (4b) et lesdits éléments de soutien latéraux (4a) sont chacun définis par des parois planes.

11. Véhicule de travail (1) comprenant un ensemble échelle (3) selon l'une quelconque des revendications précédentes.
